# EUROPEAN PATENT APPLICATION

(11) **EP 4 446 847 A1**
(43) Date of publication of application: **16.10.2024**
(21) Application number: 23755837.4
(22) Date of filing: 16.02.2023
(51) Int. Cl.: G06F 1/16

(54) **DISPLAY METHOD AND APPARATUS, AND ELECTRONIC DEVICE AND READABLE STORAGE MEDIUM**

(30) Priority: 18.02.2022 CN 202210153580
(71) Applicant: Vivo Mobile Communication Co., Ltd., Dongguan, Guangdong 523863 (CN)
(72) Inventor: ZHU, Mingyue, Dongguan, Guangdong 523863 (CN)
(74) Representative: Murgitroyd & Company
(86) International application number: PCT/CN2023/076480
(87) International publication number: WO 2023/155836

(57) **Abstract**

Disclosed are a display method and apparatus, an electronic device, and a readable storage medium, belonging to the field of communication technologies. The method includes: receiving a first input performed by a user; and controlling, in response to the first input, the expandable screen to be folded, and displaying, in response to the first input, a target object on an outer screen, wherein the target object includes at least one of the following items: a target application program window and a target application program identifier; the target application program window is an application program window of an application program, which meets a preset display condition, among the at least one application program in a running state; and the target application program identifier is an application program identifier of an application program, which does not meet the preset display condition, among the at least one application program in the running state.

## Description

### CROSS-REFERENCE TO RELATED APPLICATION

This application claims the priority of Chinese Patent Application No.202210153580.2 filed in China on February 18, 2022, the entire content of which is hereby incorporated by reference.

### TECHNICAL FIELD

This application belongs to the technical field of displaying, and in particular, to a display method and apparatus, an electronic device, and a readable storage medium.

### BACKGROUND

With the popularity of an intelligent electronic device and the continuous development of a screen technology, flexible foldable screens have emerged in people's daily life. At present, foldable phones are welcomed due to their special properties such as a large and foldable screen.

In the related technologies, in a case that a user operates a foldable screen of an electronic device, if the user needs to fold the foldable screen, the user cannot continue to operate the screen. For example, in a case that the user chats with contact 1 through a conversation window with contact 1, which is displayed on the foldable screen, if the user needs to fold the foldable screen, the user may not be able to continue to normally view the application interface on the screen. Thus, folding the foldable screen where an application program window is displayed affects the user to normally use the application program window on the screen blocked after the foldable screen is folded.

### SUMMARY

Embodiments of this application aim to provide a display method and apparatus, an electronic device, and a readable storage medium, which can effectively improve the flexibility of application program window displaying. When a foldable screen is in a folded state, it ensures that a user can normally use an application program window that is running on a background or is displayed on the foldable screen.

According to a first aspect, the embodiments of this application provide a display method. The method includes: receiving a first input performed by a user; and controlling, in response to the first input, an expandable screen to be folded, and displaying, in response to the first input, a target object on an outer screen, wherein the target object includes at least one of the following items: a target application program window and a target application program identifier; the target application program window is an application program window of an application program, which meets a preset display condition, among at least one application program in a running state; and the target application program identifier is an application program identifier of an application program, which does not meet the preset display condition, among the at least one application program in the running state.

According to a second aspect, the embodiments of this application provide a display apparatus. The apparatus includes: a receiving module, a control module, and a display module, wherein: the receiving module is configured to receive a first input performed by a user; the control module is configured to control, in response to the first input received by the receiving module, an expandable screen to be folded; the display module is configured to display, in response to the first input received by the receiving module, a target object on an outer screen, wherein the target object includes at least one of the following items: a target application program window and a target application program identifier; the target application program window is an application program window of an application program, which meets a preset display condition, among at least one application program in a running state; and the target application program identifier is an application program identifier of an application program, which does not meet the preset display condition, among the at least one application program in the running state.

According to a third aspect, the embodiments of this application provide an electronic device. The electronic device includes a processor, a memory, and a program or instructions stored on the memory and executable on the processor, and the program or instructions, when executed by the processor, implements/implement the steps of the method as mentioned in the first aspect.

According to a fourth aspect, the embodiments of this application provide a readable storage medium. The readable storage medium stores a program or instructions, wherein the program or instructions, when executed by a processor, implements/implement the steps of the method as mentioned in the first aspect.

According to a fifth aspect, the embodiments of this application provide a chip, wherein the chip includes a processor and a communication interface; the communication interface is coupled to the processor; and the processor is configured to run a program or instructions to implement the method as mentioned in the first aspect.

According to a sixth aspect, the embodiments of this application provide a computer program product, wherein the program product is stored in a non-volatile storage medium; and the program product, when executed by at least one processor, implements the method as mentioned in the first aspect.

In the embodiments of this application, the display apparatus receives a first input performed by a user, controls an expandable screen to be folded, and displays a target object on an outer screen. The target object includes at least one of the following items: a target application program window and a target application program identifier; the target application program window is an application program window of an application program, which meets a preset display condition, among at least one application program in a running state; and the target application program identifier is an application program identifier of an application program, which does not meet the preset display condition, among the at least one application program in the running state. By this method, in a case that the user folds the expandable screen, the display apparatus can display, on the outer screen, an application program window of an application program that is displayed on the first screen and meets the preset display condition, and display, on the outer screen, an application program identifier of an application program that does not meet the preset display condition, so that the user can still continue to view a desired application program window on the outer screen in a case that the user folds the foldable screen and cannot continue to view the application program window on the foldable screen. In this way, the flexibility of application program window displaying can be effectively improved. When the foldable screen is in the folded state, it ensures that the user can normally use an application program window that is running on a background or is displayed on the foldable screen.

### BRIEF DESCRIPTION OF THE DRAWINGS

FIG. 1 is a flowchart of a display method according to an embodiment of this application;
FIG. 2(a) is a schematic diagram I of an interface to which a display method is applied according to an embodiment of this application;
FIG. 2(b) is a schematic diagram II of an interface to which a display method is applied according to an embodiment of this application;
FIG. 2(c) is a schematic diagram III of an interface to which a display method is applied according to an embodiment of this application;
FIG. 3(a) is a schematic diagram IV of an interface to which a display method is applied according to an embodiment of this application;
FIG. 3(b) is a schematic diagram V of an interface to which a display method is applied according to an embodiment of this application;
FIG. 3(c) is a schematic diagram VI of an interface to which a display method is applied according to an embodiment of this application;
FIG. 4(a) is a schematic diagram VII of an interface to which a display method is applied according to an embodiment of this application;
FIG. 4(b) is a schematic diagram VIII of an interface to which a display method is applied according to an embodiment of this application;
FIG. 4(c) is a schematic diagram IX of an interface to which a display method is applied according to an embodiment of this application;
FIG. 5 is a schematic diagram X of an interface to which a display method is applied according to an embodiment of this application;
FIG. 6(a) is a schematic diagram XI of an interface to which a display method is applied according to an embodiment of this application;
FIG. 6(b) is a schematic diagram XII of an interface to which a display method is applied according to an embodiment of this application;
FIG. 6(c) is a schematic diagram XIII of an interface to which a display method is applied according to an embodiment of this application;
FIG. 7(a) is a schematic diagram XIV of an interface to which a display method is applied according to an embodiment of this application;
FIG. 7(b) is a schematic diagram XV of an interface to which a display method is applied according to an embodiment of this application;
FIG. 7(c) is a schematic diagram XVI of an interface to which a display method is applied according to an embodiment of this application;
FIG. 8 is a schematic diagram XVII of an interface to which a display method is applied according to an embodiment of this application;
FIG. 9 is a schematic structural diagram of a display apparatus according to an embodiment of this application;
FIG. 10 is a schematic structural diagram I of hardware of an electronic device according to an embodiment of this application; and
FIG. 11 is a schematic structural diagram II of hardware of an electronic device according to an embodiment of this application.

### DETAILED DESCRIPTION

The technical solutions in the embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the protection scope of this application.

This specification and claims of this application, and terms "first" and "second" are used to distinguish similar objects, but are unnecessarily used to describe a specific sequence or order. It should be understood that data used like this is interchangeable where appropriate, so that the embodiments of this application can be implemented in an order other than those illustrated or described here. Furthermore, objects distinguished by "first", "second", and the like are usually of the same class and do not limit the number of objects. For example, the first object can be one or multiple. In addition, "and/or" used in this specification and the claims represents at least one of the connected objects. Symbol "/" usually represents an "or" relationship between front and back associated objects.

A display method according to an embodiment of this application is described below through specific embodiments and their application scenarios in combination with the accompanying drawings.

The display method according to this embodiment of this application is applicable to a shopping scenario.

A foldable screen is taken as an example, which includes a foldable flexible screen 1 and a non-foldable screen 2 arranged in a manner of facing away from the flexible screen 1. In a case that a commodity page window A of shopping APP 1 is displayed on the flexible screen 1, after a user folds the flexible screen 1, the flexible screen 1 is in a folded state, and the user cannot continue to browse commodities in the commodity page window A on the flexible screen 1 at this time.

In the embodiments of this application, in a case that the commodity page window A of the shopping APP is displayed on the flexible screen 1, after the user folds the flexible screen 1, the flexible screen 1 is in the folded state, and the commodity page window A can be displayed on the screen 2, so that the user can continue to browse the commodity information in the commodity page window A on the screen 2.

The display method provided in the embodiments of this application is applicable to a video playing scenario.

A foldable screen is taken as an example, which includes a foldable flexible screen 2 and a foldable flexible screen 3 arranged in a manner of facing away from the flexible screen 2. In a case that a video playing window B of a video playing APP is displayed on the flexible screen 2, after the user folds the expandable screen, the flexible screen 2 is in an inwards folded state, and the flexible screen 3 is in an outwards folded state, the user cannot continue to watch a video content in the video playing window B on the flexible screen 2 at this time.

In the embodiments of this application, in a case that the video playing window B of the video playing APP is displayed on the flexible screen 2, after the user folds the expandable screen, the flexible screen 2 is in the inwards folded state, and the flexible screen 3 is in the outwards folded state, the video playing window B can be displayed on the flexible screen 3 at this time, so that the user can continue to watch the video content in the video playing window B on the flexible screen 3.

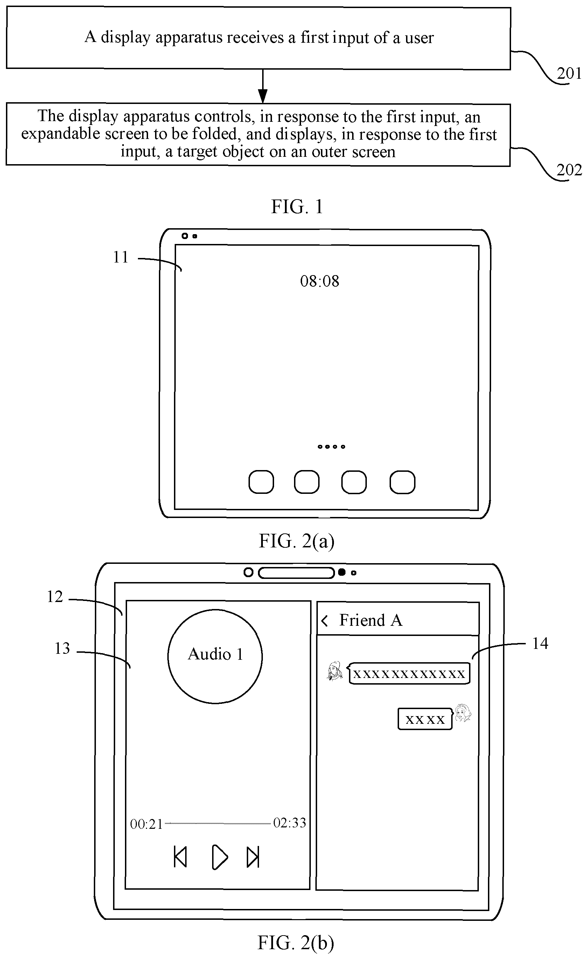

The embodiments of this application provide a display method. The display method can be applied to a display apparatus including an expandable screen. FIG. 1 shows a flowchart of a display method according to an embodiment of this application. As shown in FIG. 1, the display method provided by the embodiments of this application may include step 201 and step 202 as follows:
Step 201: A display apparatus receives a first input performed by a user.

In the embodiments of this application, the expandable screen may be a foldable screen or a flexible screen.

In the embodiments of this application, the expandable screen includes at least two screens.

In some embodiments, the expandable screen includes two foldable screens arranged in a manner of facing away from each other. In a case that the screens are in folded states, the foldable screen that is in an inwards folded state is an inner screen, and the foldable screen that is in an outwards folded state is an outer screen, that is, the above inner screen and the above outer screen are determined based on a folding direction of the expandable screen.

Exemplarily, the two foldable screens arranged in the manner of facing away from each other may be both flexible (display) screens or may each include at least one flexible screen.

Exemplarily, the above expandable screen may include a flexible screen 11 and a flexible screen 12 arranged in a manner of facing away from the flexible screen 11. The flexible screen 11 and the flexible screen 12 have the same screen size. Furthermore, in an unfolded state, the flexible screen 11 and the flexible screen 12 have opposite screen orientations. As shown in FIG. 2(a), when the expandable screen is in the unfolded state, time and several application program icons are displayed on the flexible screen 11 in the expandable screen, and an audio playing window 13 and a chat window 14 are displayed on the flexible screen 12, as shown in FIG. 2(b). For ease of understanding, the flexible screen 12 may also be referred to as a front surface of the expandable screen, and the flexible screen 13 may be referred to as a back surface of the expandable screen, or the flexible screen 12 may be referred to as a front surface of the expandable screen, and the flexible screen 13 may be referred to as a rear surface of the expandable screen.

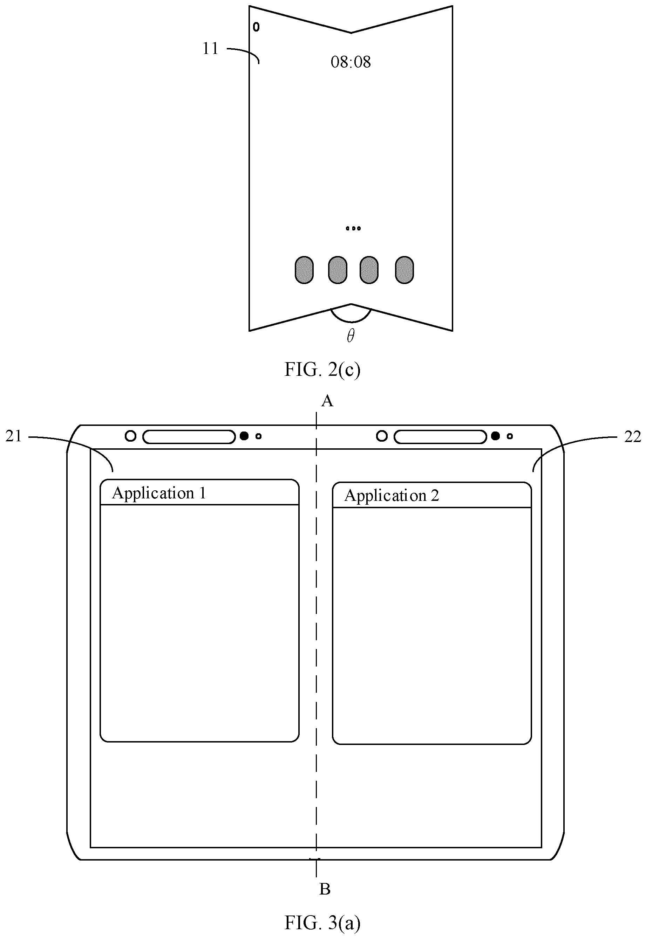

Exemplarily, as shown in FIG. 2(c), in a case that the user folds the expandable screen, the flexible screen 11 is in an inwards folded state, and an inwards folded angle is θ.

In some other embodiments, the expandable screen includes a first screen and a second screen. The first screen is a foldable screen, and the second screen is a non-foldable rigid screen. The first screen is an inner screen, and the second screen is an outer screen.

Exemplarily, the first screen may be a complete flexible screen, or a screen formed by hinging at least two rigid screens by a hinge, or a foldable screen composed of two rigid screens and a flexible screen connected between the two rigid screens.

In an example, the first screen and the second screen are two screens that are arranged in a manner of facing away from each other, that is, screen bodies of the first screen and the second screen are oriented in opposite directions. In another example, the first screen and the second screen are arranged on the same plane, that is, screen bodies of the first screen and the second screen are oriented in the same direction.

Exemplarily, the first screen and the second screen may be two screens hinged by an articulation piece or may be different screen regions of one screen. Exemplarily, the second screen may be a screen that is arranged on a back surface of a screen body of the first screen and has the same size as that of a first sub-screen of the first screen. Exemplarily, the first sub-screen may be at least a portion of a screen region of the first screen. For example, the first sub-screen may be a left half screen region of the first screen.

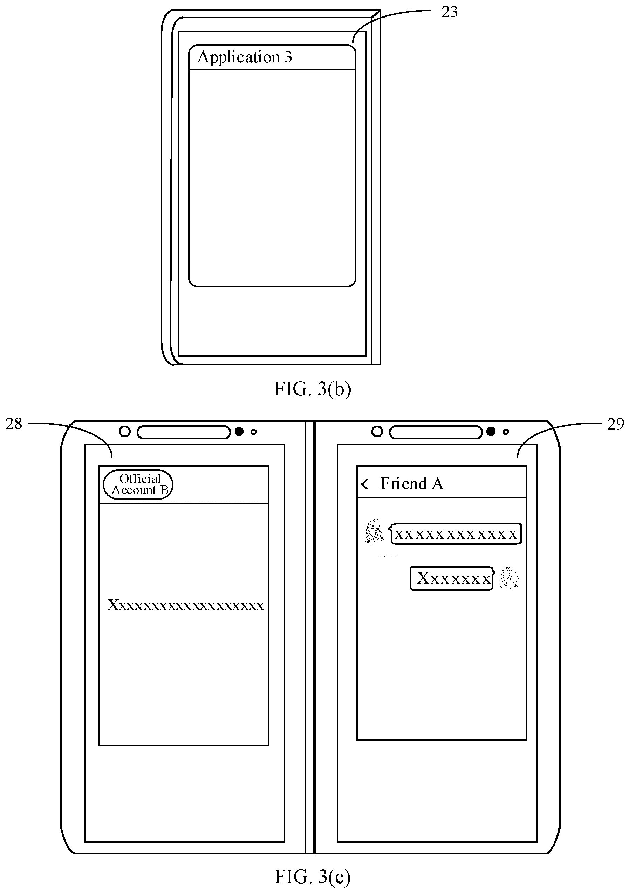

In one example, as shown in FIG. 3(a), the first screen is a flexible foldable screen. The first screen may be divided into a left sub-screen and a right sub-screen along a center line of a long edge of the first screen (namely, dashed lines AB passing through a midpoint of the long edge of the screen and perpendicular to the long side of the screen). The foldable screen may include a sub-screen 21 and a sub-screen 22. A shell is arranged on a back surface of the sub-screen 21 of the first screen. A screen 24 (namely, the second screen) is arranged on a back surface of the sub-screen 22 of the first screen. A application program window of application 1 is displayed on the sub-screen 21, and an application program window of application 3 is displayed on the sub-screen 22. As shown in FIG. 3(b), in a case that the user holds a flexible screen electronic device and the first screen faces the user, the screen is folded clockwise along an axis AB between the sub-screen 21 and the sub-screen 22. That is, the sub-screen 22 is folded to the left side, so that the sub-screen 22 is folded towards and abuts against the sub-screen 21, and the second screen 23 arranged on the back surface of the sub-screen 22 is upwards (forwards) flipped towards the user. The application program window of application 3 is displayed on the second screen 23.

For convenience of description, the sub-screen 21 may be referred to as screen A, and the sub-screen 22 may be referred to as screen B.

In another example, the first screen is a flexible foldable screen. The first screen can be divided into a left sub-screen and a right sub-screen along a center line of a long edge of the first screen. The first screen includes a sub-screen 24 and a sub-screen 25. The second screen includes a screen 26 and a screen 27. The screen 26 is arranged on a back surface of the sub-screen 24, and the screen 27 is arranged on a back surface of the sub-screen 25. In a case that the sub-screen 25 is folded to the left, the sub-screen 24 and the sub-screen 25 abut against each other; and the screen 27 on the back surface of the sub-screen 25 faces the user. In a case that the sub-screen 24 is folded to the right, the sub-screen 24 and the sub-screen 25 abut against each other; and the screen 26 on the back surface of the sub-screen 24 faces the user.

In still another example, the first screen is a screen formed by hinging a rigid screen 28 and a rigid screen 29 by an articulation piece. A shell is arranged on a back surface of the screen 28, and a rigid screen 30 (namely, the second screen) is arranged on a back surface of the screen 29. As shown in FIG. 3(c), when the first screen in an unfolded state, an application program window of official account B is displayed on the screen 28, and a chat window with contact "Xiaoming" is displayed on the screen 29. In a case that the screen 29 is folded to the left by taking the articulation piece between the screen 28 and the screen 29 as an axis, the screen 28 and the screen 29 abut against each other, and the screen 30 faces the user.

In yet another example, the first screen is a screen formed by hinging a flexible screen 31 and a flexible screen 32 by an articulation piece. A shell is arranged on a back surface of the screen 31, and a rigid screen 33 (namely, the second screen) is arranged on a back surface of the screen 32. In a case that the screen 32 is folded to the left by taking the articulation piece between the screen 31 and the screen 32 as an axis, the screen 31 and the screen 32 abut against each other, and the screen 33 faces the user.

It should be noted, the arrangement manner of the first screen and the second screen is only an example. Arrangement positions of the first screen and the second screen can be arbitrarily set based on an actual need. The embodiments of this application do not limit this.

Optionally, in the embodiments of this application, the first screen can include at least two sub-screens, and the at least two sub-screens determined based on a folding state of the first screen. Exemplarily, in a case that the first screen is folded along a longitudinal folding axis of the screen, the first screen can include a first sub-screen and a second sub-screen.

For example, after the first screen is longitudinally folded in half along a folding axis, the folding axis divides the first screen into two sub-screens. Exemplarily, when the folding axis is a folding axis in a vertical direction, the two sub-screen regions are respectively located on left and right sides of the folding axis. When the foldable screen is a folding axis in a horizontal direction, the two sub-regions are respectively located on upper and lower sides of the folding axis.

The position of the folding axis can be preset, or can be arbitrarily selected by a user according to an actual need.

Optionally, In the embodiments of this application, in a case that the first screen is in the unfolded state, the second screen can be in an off-screen or on-screen state. When the first screen is in the folded state, the second screen is in the on-screen state. In this case, a user can use the second screen.

In the embodiments of this application, the first input is used for triggering the foldable screen to be folded.

In some embodiments, the first input can be: an input performed by a user to simultaneously fold the two foldable screens arranged in the manner of facing away from each other. In some other embodiments, the first input can be: an input performed by a user to fold the first screen, or an input performed by a user on a function control, which is used for triggering the folding of the first screen, on the first screen for triggering folding of the first screen.

Optionally, the first input can include any one of the following: a touch input, a voice input, a gesture input, or another feasible input. The embodiments of this application do not impose a limitation on this. Exemplarily, the first input is a clicking input, a sliding input, a pressing input, and the like performed by a user. Further, the clicking operation can be performed for any number of times. The sliding operation can be performed in any direction, such as upward sliding, downward sliding, leftward sliding, rightward sliding, and the like. The embodiments of this application do not impose a limitation on this.

Step 202: The display apparatus controls, in response to the first input, an expandable screen to be folded, and displays, in response to the first input, a target object on an outer screen.

The target object includes at least one of the following items: a target application program window and a target application program identifier;
the target application program window is an application program window of an application program, which meets a preset display condition, among at least one application program in a running state; and the target application program identifier is an application program identifier of an application program, which does not meet the preset display condition, among the at least one application program in the running state.

Optionally, in the embodiments of this application, the controlling the expandable screen to be folded and the displaying the target object on the outer screen can be performed simultaneously or sequentially. The embodiments of this application do not impose a limitation on this.

In one example, the display apparatus displays, after receiving an input of folding the expandable screen, the target object on the outer screen when the expandable screen is folded.

In another example, after receiving an input of folding the expandable screen, the display apparatus first controls the expandable screen to be folded and then displays, after the expandable screen is in a folded state, the target object on the outer screen.

In still another example, after receiving an input of folding the expandable screen, the display apparatus first displays the target object on the outer screen and then controls, in a case that the target object is displayed on the outer screen, the expandable screen to be folded.

In the embodiments of this application, the explanation of the outer screen is referred to the above content, and will not be repeated here.

In the embodiments of this application, the application program window is a window in which an application program interface of an application program is displayed.

Optionally, in the embodiments of this application, the at least one application program in the running state includes at least one of the following items: an application program that is running in a background and an application program that is running in a foreground and has an application program window displayed on an inner screen.

Optionally, in a case that a plurality of application programs are started, the display apparatus can display a running interface of each of the plurality of application programs on the inner screen in the form of a window, respectively.

Optionally, in the embodiments of this application, the target application program window may include one or more application program windows, and the target application program identifier may include one or more application program identifiers.

Optionally, the display apparatus may display the target application program windows in a vertical arrangement on the inner screen, or may display the target application program windows in a horizontal arrangement. Optionally, the plurality of target application program windows may not overlap at all or may at least partially overlap.

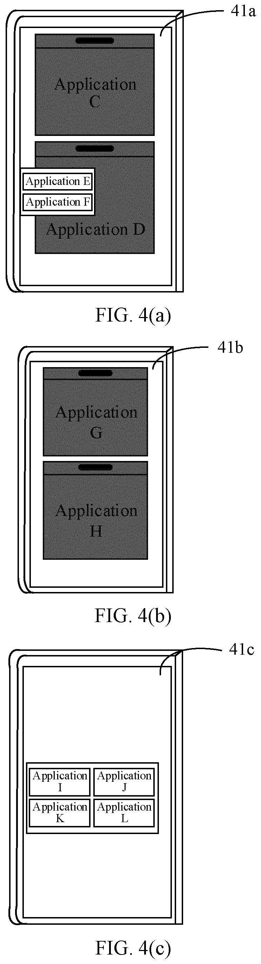

Exemplarily, the target object including two target application program windows and two program identities is taken as an example. In conjunction with FIG. 3(a) and FIG. 3(b), as shown in FIG. 4(a), in a case that the first screen (namely, the inner screen) of the expandable screen is in the folded state, application program windows of application C and application D, and program icons of application E and application F are displayed on the outer screen 41a.

Exemplarily, the target object including two target application program windows is taken as an example. In conjunction with FIG. 3(a) and FIG. 3(b), as shown in FIG. 4(b), in a case that the first screen (namely, the inner screen) of the expandable screen is in the folded state, application program windows of application G and application H are displayed on the outer screen 41b.

Exemplarily, the target object including four target application program identifiers is taken as an example. In conjunction with FIG. 3(a) and FIG. 3(b), as shown in FIG. 4(c), in a case that the first screen (namely, the inner screen) of the expandable screen is in the folded state, application program identifiers of application I, application J, application K, and application L are displayed on the outer screen 41c.

Optionally, in the embodiments of this application, the preset display condition includes at least one of the following items:
an application program is associated with the preferred screen region of the inner screen; and
a preset region of an application program window of an application program is located in preferred screen region of the inner screen.

The preferred screen region is a screen region capable of determining a display attribute of an application program window displayed on the outer screen.

Optionally, the preferred screen region may be a screen region preset in the inner screen (or the first screen). Exemplarily, the preferred screen region may be a screen region of the first sub-screen of the inner screen, or a screen region of the second sub-screen of the inner screen.

Exemplarily, the preferred screen region is a screen region that satisfies an operation preference of the user on the screen, that is, a screen region that the user is accustomed to or prefers to operate. For example, when the user uses a screen (such as the inner screen), the user usually has operation habits with the left hand and the right hand. If the user often operates the screen with the right hand, a right half screen region (such as screen B described above) of the screen may be set to be the preferred screen region. For ease of understanding, the preferred screen region may also be referred to as a preferred screen.

Exemplarily, in a case that the user folds the inner screen, the display apparatus may display, on the second screen, an application program window of an application program, which meets the preset display condition, among application programs respectively corresponding to a plurality of application program windows displayed on the inner screen, so that the user can continue to operate the application program window, and the display apparatus may display, on the second screen, an application program icon of an application program, which does not meet the preset display condition, among the application programs respectively corresponding to the plurality of application program windows displayed on the inner screen, so that the user can view historically used application programs on the second screen.

Exemplarily, in a case that the inner screen is in the folded state, the display apparatus may control the inner screen to be off or may cancel (hide) an application program window displayed on the inner screen, thereby reducing the power consumption of the screen.

It should be noted, if an application program meets the preset display condition, it indicates that the application program window of the application program is an application program window that needs to be displayed in the preferred screen region. Since the setting of the preferred screen region is related to a behavior habit of the user, a screen region commonly used by the user is set to be the preferred screen region, and a window currently used by the user is generally displayed in the screen region commonly used by the user. Therefore, a display priority of an application program window that meets the preset display condition is higher, and the application program window is a window that the user wants to view and operate.

Optionally, the preset region of the application program window may include at least one of the following items: a center region of the application program window, an upper half region of the application program window, and the like. The preset region may be set according to an actual need. The embodiments of this application do not impose a limitation on this.

Optionally, the display apparatus can acquire a display parameter of a currently displayed application program window, determine, based on the display parameter, a screen region where the center region of the application program window is located, and then determine whether the center region of the application program window is in the preferred screen region.

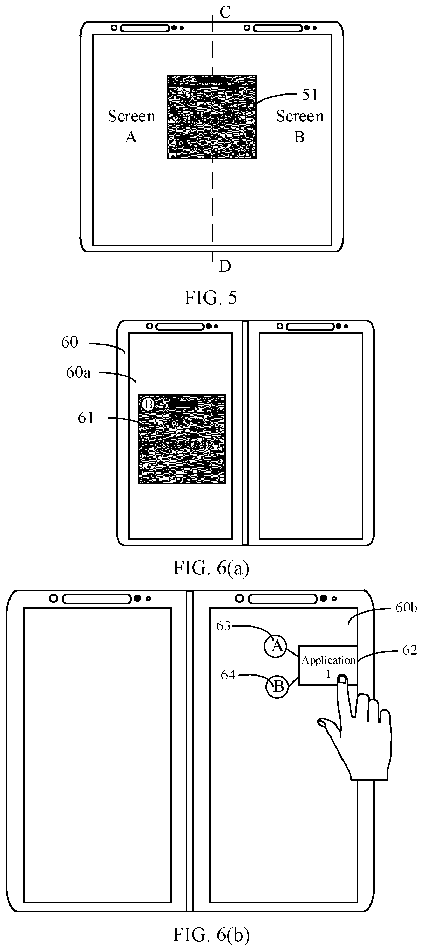

Exemplarily, by way of example, the inner screen is a flexible screen, and the foldable screen includes a left sub-screen and a right sub-screen which have the same size. Screen A described above used as the preferred screen region is taken as an example. A rule for determining, by the display apparatus, whether the center region of the application program window is located in the preferred screen region is as follows:
Step 1: Determine a positional relationship between a window center region of an application program window 51 and a screen boundary for screen A and screen B in the first screen.
Step 2: If the center region of the application program window 51 of application 1 is located in screen A, it is determined that the application program window 51 is an application program window in screen A region, and otherwise, the application program window 51 is an application program window in screen B. As shown in FIG. 5, if the center of the application program window 51 falls exactly at a position on the screen boundary, it is determined by default that the application program window 51 is an application program window in the preferred screen region.

It should be noted, to distinguish screen A from screen B in the inner screen, a boundary between screen A and screen B is shown by the dashed lines AB in FIG. 3.

The above display method will be explained below through specific examples.

In some embodiments, by way of example, the expandable screen includes two foldable screens which are arranged in a manner of facing away from each other, that is, the expandable screen is a flexible double-sided screen. When the flexible double-sided screen is in an unfolded state, a plurality of application program windows are displayed on a first sided screen of the flexible double-sided screen. After a user folds the flexible double-sided screen, the first screen of the flexible double-sided screen is in an inwards folded state, and a second sided screen of the flexible double-sided screen is in an outwards folded state.

For illustration, when the flexible double-sided screen is in the unfolded state, a chat window of social APP 1 and a reading window of reading APP 1 are displayed on the first screen facing the user. After the user folds the flexible double-sided screen in half towards the face, the first sided screen (namely, the inner screen) is in the inwards folded state. Since the lines of sight of the user cannot fully reach the first sided screen, the user cannot view contents in both the chat window and the reading window normally. In this case, the display apparatus may display, on the second sided screen (namely, the outer screen) that is in the outwards folded state, the chat window of social APP 1 and the reading window of reading APP 1 which are displayed on the first sided screen, so that the user can continue to view the chat window and the reading window normally.

It should be noted, inward folding is pushing the screen, and outward folding is stretching the screen. The inwards folded state means that a screen faces an inner side, and the outwards folded state means that a screen faces an outer side.

In some other embodiments, by way of example, the expandable screen includes a first foldable screen and a second non-foldable screen that is arranged in a manner of facing away from a first sub-screen of the first screen. When the first screen is in an unfolded state, a plurality of application program windows are displayed on the first screen. After the user longitudinally folds the first screen along a folding axis, the first sub-screen of the first screen is opposite to a second sub-screen, and the second screen that is arranged in the manner of facing away from the first sub-screen of the first screen faces the user.

For illustration, when the first screen is in an unfolded state, a video playing window 1 and a chat window 2 are displayed on the first screen (namely, the inner screen). After the user longitudinally folds the first screen along a center line, the first screen is divided into a sub-screen A and a sub-screen B which are located in two different planes. The display apparatus may display the video playing window 1 and the chat window 2 on the second screen (namely, the outer screen) that is arranged in the manner of facing away from the sub-screen A of the first screen, so that the user can continue to view contents in the video playing window and the chat window normally.

In the display method provided by the embodiments of this application, the display apparatus receives a first input performed by a user, controls an expandable screen to be folded, and displays a target object on an outer screen. The target object includes at least one of the following items: a target application program window and a target application program identifier; the target application program window is an application program window of an application program, which meets a preset display condition, among at least one application program in a running state; and the target application program identifier is an application program identifier of an application program, which does not meet the preset display condition, among the at least one application program in the running state. By this method, in a case that the user folds the expandable screen, the display apparatus can display, on the outer screen, an application program window of an application program that is displayed on the first screen and meets the preset display condition, and display, on the outer screen, an application program identifier of an application program that does not meet the preset display condition, so that the user can still continue to view a desired application program window on the outer screen in a case that the user folds the foldable screen and cannot continue to view the application program window on the foldable screen. In this way, the flexibility of application program window displaying can be effectively improved. When the foldable screen is in the folded state, it ensures that the user can normally use an application program window that is running on a background or is displayed on the foldable screen.

Optionally, in the embodiments of this application, the expandable screen includes two foldable screens which are arranged in a manner of facing away from each other; the inner screen is a foldable screen, which is in an inwards folded state, of the two flexible screens; and the outer screen is a foldable screen, which is in an outwards folded state, of the two flexible screens.

Or, the expandable screen includes a first screen and a second screen. The inner screen is the first screen, and the outer screen is the second screen. The first screen is a foldable screen, and the second screen is a non-foldable screen.

Optionally, in the embodiments of this application, in step 202, the display apparatus displays a target object on an outer screen, which may include step 202a and step 202b as follows:

Step 202a: In a case that the target object includes a target application program window, and a first application program is associated with a preferred screen region of an inner screen, display a first application program window of the first application program on the outer screen.

The target object includes the first application program window.

Step 202b: In a case that the target object includes a target application program window, and a preset region of an application program window of a second application program is located in the preferred screen region of the inner screen, display a second application program window of the second application program on the outer screen.

The target object includes the second application program window.

Exemplarily, in a case that the first application program that is running in a background of an electronic device is associated with the preferred screen region of the inner screen, the inner screen is controlled to be folded, and the display apparatus may display the application program window of the first application program on the outer screen.

Exemplarily, in a case that a center region of the application program window of the second application program is located in the preferred screen region of the inner screen, the inner screen is controlled to be folded, and the display apparatus may display the application program window of the second application program on the outer screen.

Example 1: Screen B is used as the preferred screen region in the inner screen. When the inner screen is in an unfolded state, a chat window 3 is displayed on screen A of the inner screen, a video playing window 4 and a chat window 5 are displayed on screen B. After the user longitudinally folds the inner screen along a folding axis AB, the display apparatus may display the video playing window 4 in a first display region of the outer screen and display the chat window 5 in a second display region of the outer screen, so that the user can continue to view contents in both the video playing window 5 and the chat window 5 normally, and the display apparatus may display the application program icon of the application program corresponding to the chat window 3 on the outer screen in a suspended manner, so that the user can quickly trigger the chat window 3 to be displayed through the suspended application program icon in a case that the user needs to view the chat window 3.

In this way, in a case that the user folds the inner screen, the display apparatus may display, on the outer screen, the application program window, having the center region located in the preferred screen region of the inner screen, among the plurality of application program windows displayed on the inner screen, and display, on the outer screen, the application program icon of the application program corresponding to the application program window, having the center region not located in the preferred screen region of the inner screen, among the plurality of application program windows displayed on the inner screen, so that the user can still continue to view the desired application program window from the outer screen in a case that the user folds the inner screen. In addition, since the application program windows displayed in other screen regions except the preferred screen region are not application program windows that are commonly used by the user, in a case that the inner screen is unfolded, application program icons corresponding to these application program windows can be displayed on the outer screen, thereby saving a display space of the outer screen and greatly improving the flexibility of displaying of the application program windows.

Optionally, in the embodiments of this application, before step 201, the display method provided by the embodiments of this application further include step A1 and step A2 as follows:
Step A1: The display apparatus receives a second input performed by a user.
Step A2: The display apparatus determines a screen region corresponding to the second input to be the preferred screen region in response to the second input.

Exemplarily, the second input can include any one of the following items: a touch input, a voice input, a gesture input, and the like.

Further optionally, in the embodiments of this application, the preferred screen region is determined from the first screen based on a user behavior.

In one example, the display apparatus may receive a selection input performed by a user in the screen, and a screen region selected by the user is used as the preferred screen region. For example, if a user is generally used to operating a right half screen region with the right hand, the user can frame the right half screen region from the inner screen as the preferred screen region. For another example, the display apparatus may display preset screen identifiers the sub-screen A and the sub-screen B in the inner screen, and the user may click a screen identifier (such as the screen identifier of the sub-screen B) needing to be set as the preferred screen region, and the sub-screen (such as the sub-screen) indicated by the screen identifier (such as the screen identifier of the sub-screen B) is used as the preferred screen region.

In still another example, the display apparatus may acquire historical behavior information of the user on the screen, determine, according to the historical behavior information of the user, a screen region that the user operates (or uses) at the highest frequency, and set the screen region to be the preferred screen region.

It should be noted, when the user uses the inner screen, the user usually has operation habits with the left hand and the right hand. If the user often operates the screen with the right hand, a right half screen region of the screen may be set to be the preferred screen region, and a left half screen region of the screen is set to be the non-preferred screen region.

In this way, the display apparatus can easily and flexibly set a preferred screen for the user based on the selection of the user or the historical behavior information of the user.

Optionally, in the embodiments of this application, the target object includes a target application program identifier, and the target application program identifier includes at least one application program identifier.

Optionally, after step 202 described above, the display method provided by the embodiments of this application further includes step B 1 and step B2 as follows:
Step B 1: The display apparatus receives a third input performed by a user on the target application program identifier in the at least one application program identifier.
Step B2: The display apparatus displays, in response to the third input, an application program window of an application program corresponding to the target application identifier on the outer screen.

Exemplarily, the third input can include any one of the following items: a touch input, a voice input, a gesture input, or the like. The third input may be any feasible input. The embodiments of this application do not impose any limitation on this.

In one example, in a case that a plurality of target application program windows are displayed on the outer screen, after receiving the third input performed by a user on the target application program identifier, the display apparatus may simultaneously displays an application program window of a target application program corresponding to the target application program identifier and the target application program window on the outer screen.

Example 2: In combination with example 1 above, after the user longitudinally folds the inner screen along the folding axis AB, the display apparatus displays the video playing window 4 on the first display region of the outer screen, displays the chat window 5 on the second display region of the outer screen, and displays the application program icon of the application program corresponding to the chat window 3 on the outer screen in the suspended manner. After the user clicks on the application program icon, the chat window 3 can be displayed on a third display region of the outer screen.

In another example, in a case that a plurality of target application program windows are displayed on the outer screen, after receiving the third input performed by a user on the target application program identifier, the display apparatus may replace any target application program window among the plurality of target application program windows with an application program window of a target application program corresponding to the target application program identifier.

Example 3: In combination with example 2 above, in a case that the video playing window 4 is displayed in the first display region of the outer screen, the chat window 5 is displayed in the second display region of the outer screen, and the application program icon of the application program corresponding to the chat window 3 is displayed on the outer screen in the suspended manner, after the user clicks on the application program icon, the chat window 4 displayed in the second display region of the outer screen may be replaced with the chat window 3.

In this way, in a case that the user needs to view an application program window, the user can quickly trigger the application program window to be displayed by operating the application program icon of the application program window needing to be viewed on the outer screen, without unfolding the screen.

Further optionally, in the embodiments of this application, after step B2, the display method provided by the embodiments of this application further include step C1 and step C2 as follows:
Step C1: The display apparatus receives a fourth input performed by a user.
Step C2: The display apparatus controls, in response to the fourth input, the expandable screen to be unfolded, displays, in a preferred screen region of an inner screen, an application program window that is associated with the preferred screen region, and displays, in a non-preferred screen region of the inner screen, an application program window that is not associated with the preferred screen region.

Exemplarily, the fourth input is used for triggering the expandable screen to be unfolded.

Exemplarily, the fourth input can include any one of the following items: an input performed by a user to expand the inner screen, a touch input performed by a user on a function control, a voice input, a gesture input, telescoping input on a reel screen, or other feasible inputs. The embodiments of this application do not impose a limitation on this.

Example 4: In combination with example 1, example 2, and example 3 above, in a case that the video playing window 4 is displayed in the first display region of the outer screen, the chat window 5 is displayed in the second display region of the outer screen, and the application program icon of the application program corresponding to the chat window 3 is displayed on the outer screen in the suspended manner, the inner screen is controlled to be unfolded; and the display apparatus displays the chat window 3 on screen A of the inner screen and displays the video playing window 4 and the chat window 5 on screen B.

In this way, in a case that the inner screen is updated from the folded state to the unfolded state, an application program window can be redisplayed on the inner screen according to the association relationships between the application program window displayed on the outer screen and the preferred screen region and non-preferred screen region of the inner screen, so that the user can view the desired application program window on the preferred screen region of the inner screen.

Optionally, in the embodiments of this application, the preset display condition includes that an application program is associated with the preferred screen region of the inner screen. The display method provided by the embodiments of this application further includes step D 1 to step D4 as follows:
Step D1: The display apparatus receives a fifth input performed by a user on a first application program icon of the first application program.
Step D2: The display apparatus displays at least two screen region identifiers in response to the fifth input.

Each screen region identifier indicates one screen region; the at least two screen region identifiers include a first screen region identifier; and a first screen region indicated by the first screen region identifier is the preferred screen region.

Step D3: The display apparatus receives a sixth input performed by a user on the first screen region identifier among the at least one screen region identifier.

Step D4: The display apparatus establishes an association relationship between the first screen region and the first application program in response to the sixth input, and displays the first screen region identifier on the first application program icon.

Exemplarily, the fifth input can include any one of the following items: a touch input, a voice input, a gesture input, or the like. The fifth input may be any feasible input. The embodiments of this application do not impose any limitation on this.

Exemplarily, the screen region identifiers can include any one of the following items: characters, pictures, icons, figures, and the like. The embodiments of this application do not impose any limitation on this. The identifiers in this application are characters, symbols, images, and the like used for indicating information. A control or another container can be used as a carrier for displaying information. The identifiers include but are not limited to a character identifier, a symbol identifier, and an image identifier.

Exemplarily, the sixth input can include any one of the following items: a touch input, a voice input, a gesture input, or the like. The sixth input may be any feasible input. The embodiments of this application do not impose any limitation on this.

Exemplarily, in a case that the application program icon of the first application program is displayed, the user clicks on the application program icon, and the display apparatus displays the at least two screen region identifiers for selection by the user. For example, after the user clicks on the application program icon of APP 1, two screen region identifiers "A" and "B" are displayed, wherein the screen region identifier "A" is used for indicating a non-preferred screen region, and the screen region identifier "B" is used for indicating a preferred screen region. After the user clicks on the screen region identifier "B", APP 1 is associated with the preferred screen region.

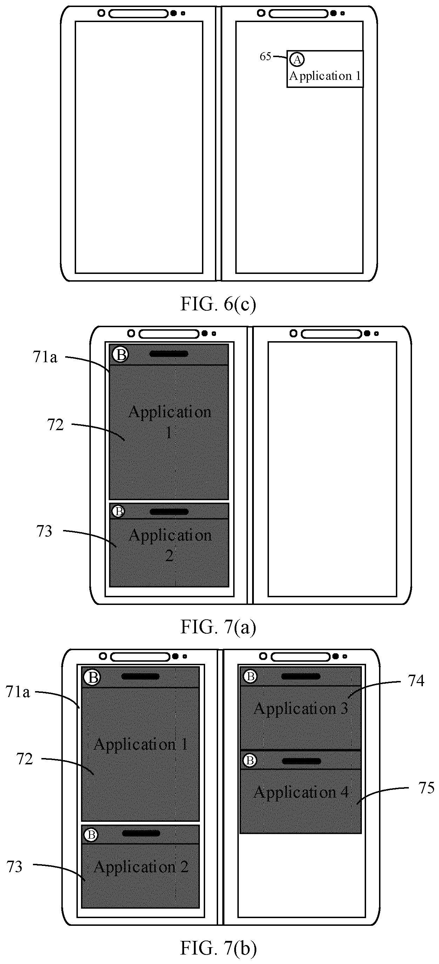

For illustration, as shown in FIG. 6(a), an application program window 61 of application 3 is displayed on a sub-screen 60a of a screen 60 (namely, the first screen) of an electronic device. After a user clicks on a minimize control of the application program window 61, as shown in FIG. 6(b), the application program window 61 is minimized into an application program icon 62 of application 3, and the application program icon 62 of application 3 is displayed on a sub-screen 60b of the screen 60. In a case that the user makes a long press on the application program icon 62, a screen identifier 63 and a screen identifier 64 are displayed. As shown in FIG. 6(c), after the user clicks on the screen identifier 63, a screen (namely, screen A) indicated by the screen identifier 63 is used as the preferred screen of application 3, and a screen identifier 65 used for indicating screen A is displayed at the top left corner of the application program icon 62 to indicate that the preferred screen of application 3 is screen A.

In this way, it is possible for the user to conveniently and quickly set a screen region associated with an application program according to an actual need.

Optionally, in the embodiments of this application, the target object includes an application program window of the second application program; a preset region of the application program window of the second application program is located in a first screen region of the inner screen; and the first screen region is the preferred screen region. A second application program icon of the second application program includes a first screen region identifier; and the first screen region identifier indicates the first screen region.

The display method provided by the embodiments of this application further includes step E1 to step E3 as follows:
Step E1: The display apparatus receives a seventh input performed by a user on the application program window of the second application program.
Step E2: The display apparatus moves the application program window of the second application program to a second screen region in response to the seventh input.
Step E3: The display apparatus updates the first screen region identifier into a second screen region identifier in a case that the preset region of the application program window of the second application program is located at the second screen region.

The second screen region is a non-preferred screen region; and the second screen region identifier indicates the second screen region.

Exemplarily, the seventh input can include any one of the following items: a touch input, a voice input, a gesture input, or the like. The seventh input may be any feasible input. The embodiments of this application do not impose any limitation on this.

Exemplarily, the seventh input may be an input performed by a user to drag the application program window of the second application program to the second screen region.

Exemplarily, by way of example, the non-preferred screen region is screen A in the inner screen, and the preferred screen region is screen B in the inner screen. A center region of the application program window of APP 2 is located in screen A, and the screen region identifier "A" is displayed at the top left corner of the application program icon of APP 2. After the user drags the application program window to the right to make the center region of the application program window located in screen B, the display apparatus updates the screen region identifier on the application program icon of the APP 2 into "B", namely, the display apparatus sets APP 2 to be an application program associated with the preferred screen region.

In this way, the display apparatus can update the screen region associated with the application program according to a display position of the application program window of the application program on the inner screen, and update the screen region identifier displayed on the application program, so that the user can conveniently and quickly set the screen region associated with the application program according to an actual need.

Further optionally, in the embodiments of this application, in a case that the inner screen is in the unfolded state, the display apparatus may display, on the inner screen, each application program window in a screen region associated with an application program corresponding to each application program window corresponding to an application based on a type of each application program window.

Exemplarily, by way of example, the application program windows include an application program window 1 and an application program window 2. When the first screen is in the folded state, the user clicks on the application program icon of the application program corresponding to the application program window 1. If the screen region associated with the application program corresponding to the application program window 1 is screen A in the first screen, the application program window 1 is displayed on screen A after the first screen is unfolded. Similarly, if the screen region associated with the application program corresponding to the application program window 2 is screen B, the application program window 2 is displayed on screen B after the first screen is unfolded.

Exemplarily, the types of the application program windows include at least one of the following items: landscape type application program windows and portrait type application program windows.

It should be understood that a window width of a landscape type application program window is greater than a window height, and a window width of a portrait type application program window is less than a window height. The landscape type application program window corresponds to a landscape state application program, and the portrait type application program window corresponds to a portrait state application program.

Exemplarily, for explanation, the screen regions associated with the application program windows are a left half screen (denoted as screen A) of the inner screen and a right half screen (denoted as screen B) of the inner screen, and a display rule of the application program windows in the embodiments of this application will be explained by the following examples:

Example 1: As shown in FIG. 7(a), in a case that an application program window 72 of application 1 and an application program window 72 of application 2 need to be simultaneously displayed on screen A 71a in the first screen, if application 1 is a landscape state application and application 2 is a portrait state application, when the application program window 72 of application 1 and the application program window 73 of application 2 are simultaneously displayed on screen A 71a, a width of the application program window 72 is set to be a half screen width (namely, half of a width of the first screen). Based on this width, a height of the application program window 72 is calculated according to a height-to- width ratio that is approximately a golden ratio (namely, 0.618: 1). A width of the application program window 73 is set to the half screen width, and a height is set to be a height of a screen region that fills remaining screen A.

Example 2: In conjunction with FIG. 7(a) above, as shown in FIG. 7(b), in a case that an application program window 74 of application 3 and an application program window 75 of application 4 are simultaneously displayed on screen B 71b in the first screen, if both application 3 and application 4 are landscape state applications, a width of the application program window 74 is set to be a half screen width. Based on the half screen width, a height of the application program window 74 is calculated according to a height-to-width ratio that is approximately a golden ratio. A width of the application program window 75 is set to be a half screen width. Based on the half screen width, a height of the application program window 75 is calculated according to a height-to-width ratio that is approximately a golden ratio.

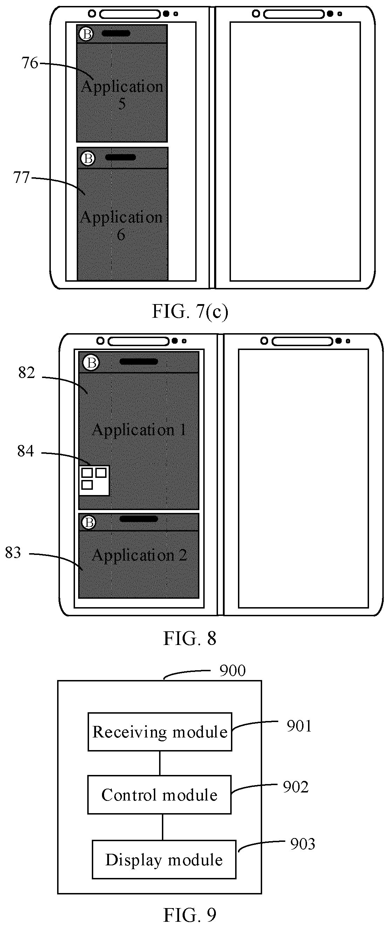

Example 3: As shown in FIG. 7(c), in a case that an application program window 76 of application 5 and an application program window 77 of application 6 are simultaneously displayed on screen A 71c in the first screen, if both application 5 and application 6 are portrait state applications, heights of both the application program window 76 and the application program window 77 are a half of a height of the first screen. Based on the heights, widths of the application program windows are calculated according to a height-to-width ratio that is approximately a golden ratio, and the application program window 76 and the application program window 77 are arranged in sequence from top to bottom and are displayed in a non-overlapping manner.

In this way, the display apparatus can display the application program windows according to a certain display rule according to the types of the application program windows that need to be displayed, thereby effectively saving the screen space on the premise of guaranteeing the display effect of the application program windows.

Further optionally, in a case that the inner screen is in the unfolded state, the display apparatus may determine screen regions of the inner screen respectively associated with a plurality of application programs that need to be displayed on the inner screen. If there are more than two application programs being associated with the same screen region, the display apparatus determines two application programs with the earliest start time and the earlier start time from the plurality of application programs, then display the application program windows of the two application programs in the screen region, and display the remaining application programs among the plurality of application programs in the screen region in the form of an icon set.

For illustration, as shown in FIG. 8, in a case that there are five application programs (namely, application 1, application 2, application 3, application 4, and application 5) each associated with sub-screen 1, the display apparatus displays an application program window 82 of application 1 and an application program window 83 of application 2 on sub-screen 1 (screen A described above) of the first screen and displays application program icons of application 3, application 4, and application 5 in a suspension control 84.

Exemplarily, when the user needs to use the application program window of a certain application program in the suspension control, the application program window can be quickly triggered to be displayed by clicking on the application program icon of the application program in the suspension control. Exemplarily, the application program window may be displayed on the displayed application program windows in a stack-up manner, or the displayed application program windows may be hidden in the display region where the displayed application program windows are located, and the application program window corresponding to the application program icon in the suspension control is displayed in the display region.

In this way, in a case that there are many application program windows needing to be displayed on the same screen, the display apparatus can display two application program windows that meet the condition, and suspend other application program windows in the form of icons, which is convenient for viewing by the user and improves the flexibility of displaying.

It should be noted, an executive body of the display method provided by the embodiments of this application can be the display apparatus, or a control module configured to implement the display method in the display apparatus. In the embodiments of this application, using the display apparatus to implement the display method is taken as an example to explain the display apparatus provided by the embodiments of this application.

The embodiments of this application provide a control apparatus. As shown in FIG. 9, the control apparatus 900 includes: a receiving module 901, a control module 902, and a display module 903. The receiving module 901 is configured to receive a first input performed by a user; the control module 902 is configured to control, in response to the first input received by the receiving module 901, an expandable screen to be folded; the display module 903 is configured to display, in response to the first input received by the receiving module, a target object on an outer screen, wherein the target object includes at least one of the following items: a target application program window and a target application program identifier; the target application program window is an application program window of an application program, which meets a preset display condition, among at least one application program in a running state; and the target application program identifier is an application program identifier of an application program, which does not meet the preset display condition, among the at least one application program in the running state.

Optionally, in the embodiments of this application, the display module is specifically configured to: in a case that the target object includes a target application program window, and a first application program is associated with a preferred screen region of an inner screen, display a first application program window of the first application program on the outer screen, wherein the target object includes the first application program window; and
the display module is specifically configured to: in a case that the target object includes a target application program window, and a preset region of an application program window of a second application program is located in the preferred screen region of the inner screen, display a second application program window of the second application program on the outer screen, wherein the target object includes the second application program window.

Optionally, in the embodiments of this application, the expandable screen includes two flexible screens which are arranged in a manner of facing away from each other; the inner screen is a flexible screen, which is in an inwards folded state, of the two flexible screens; and the outer screen is a flexible screen, which is in an outwards folded state, of the two flexible screens.

Optionally, in the embodiments of this application, the at least one application program in the running state includes at least one of the following items: an application program that is running in a background and an application program that is running in a foreground and has an application program window displayed on an inner screen.

Optionally, in the embodiments of this application, the apparatus further includes: a determining module;
the receiving module is further configured to receive a second input performed by a user; and
the determining module is configured to determine, in response to the second input received by the receiving module, a screen region corresponding to the second input to be the preferred screen region.

Optionally, in the embodiments of this application, the target object includes a target application program identifier, and the target application program identifier includes at least one application program identifier;
the receiving module is further configured to receive a third input performed by a user on the target application program identifier in the at least one application program identifier; and
the display module is further configured to display, in response to the third input received by the receiving module, an application program window of an application program corresponding to the target application identifier on the outer screen.

Optionally, in the embodiments of this application,
the receiving module is further configured to receive a fourth input performed by a user; and
the control module is further configured to control, in response to the fourth input received by the receiving module, the expandable screen to be unfolded; and
the display module is further configured to: display, in a preferred screen region of an inner screen, an application program window that is associated with the preferred screen region, and display, in a non-preferred screen region of the inner screen, an application program window that is not associated with the preferred screen region.

Optionally, in the embodiments of this application, the preset display condition includes that an application program is associated with the preferred screen region of the inner screen; and
the receiving module is further configured to receive a fifth input performed by a user on a first application program icon of the first application program;
the display module is further configured to: display at least two screen region identifiers in response to the fifth input received by the receiving module, wherein each screen region identifier indicates one screen region; the at least two screen region identifiers include a first screen region identifier; a first screen region indicated by the first screen region identifier is the preferred screen region;
the receiving module is further configured to receive a sixth input performed by a user on the first screen region identifier among the at least one screen region identifier;
the apparatus further includes: an execution module;
the execution module is configured to establish an association relationship between the first screen region and the first application program in response to the sixth input received by the receiving module; and
the display module is further configured to display the first screen region identifier on the first application program icon in response to the first input received by the receiving module.

Optionally, in the embodiments of this application, the target object includes an application program window of the second application program; a preset region of the application program window of the second application program is located in a first screen region of the inner screen; and the first screen region is the preferred screen region. a second application program icon of the second application program includes a first screen region identifier; the first screen region identifier indicates the first screen region;
the receiving module is further configured to receive a seventh input performed by a user on the application program window of the second application program;
the apparatus further includes: an execution module;
the execution module is configured to move the application program window of the second application program to a second screen region in response to the seventh input received by the receiving module;
the execution module is further configured to update the first screen region identifier into a second screen region identifier in a case that the preset region of the application program window of the second application program is located at the second screen region;
the second screen region is a non-preferred screen region; and the second screen region identifier indicates the second screen region.

In the display apparatus provided by the embodiments of this application, the display apparatus receives a first input performed by a user, controls an expandable screen to be folded, and displays a target object on an outer screen. The target object includes at least one of the following items: a target application program window and a target application program identifier; the target application program window is an application program window of an application program, which meets a preset display condition, among at least one application program in a running state; and the target application program identifier is an application program identifier of an application program, which does not meet the preset display condition, among the at least one application program in the running state. By this method, in a case that the user folds the expandable screen, the display apparatus can display, on the outer screen, an application program window of an application program that is displayed on the first screen and meets the preset display condition, and display, on the outer screen, an application program identifier of an application program that does not meet the preset display condition, so that the user can still continue to view a desired application program window on the outer screen in a case that the user folds the foldable screen and cannot continue to view the application program window on the foldable screen. In this way, the flexibility of application program window displaying can be effectively improved. When the foldable screen is in the folded state, it ensures that the user can normally use an application program window that is running on a background or is displayed on the foldable screen.

The display apparatus in the embodiments of this application can be an apparatus, or can be a component in a terminal, an integrated circuit, or a chip. The apparatus can be a mobile electronic device or a non-mobile electronic device. Exemplarily, the mobile electronic device may be a mobile phone, a tablet computer, a notebook computer, a palm computer, an in-vehicle electronic device,, a wearable device, an ultra-mobile personal computer (ultra-mobile personal computer, UMPC), a netbook, or a personal digital assistant (personal digital assistant, PDA); and the non-mobile electronic device may be a server, a network attached storage (Network Attached Storage, NAS), a personal computer (personal computer, PC), a television (television, TV), a teller machine, or a self-service machine, which are not specifically limited in the embodiments of this application.

The display apparatus in the embodiments of this application may be an apparatus with an operating system. The operating system may be an Android (Android) operating system, may be an ios operating system, or may be another possible operating system, and is not specifically limited in the embodiments of this application.

The display apparatus provided by the embodiments of this application can implement all processes implemented by the display method shown in FIG. 1 to FIG. 8, details of which are omitted here for brevity.

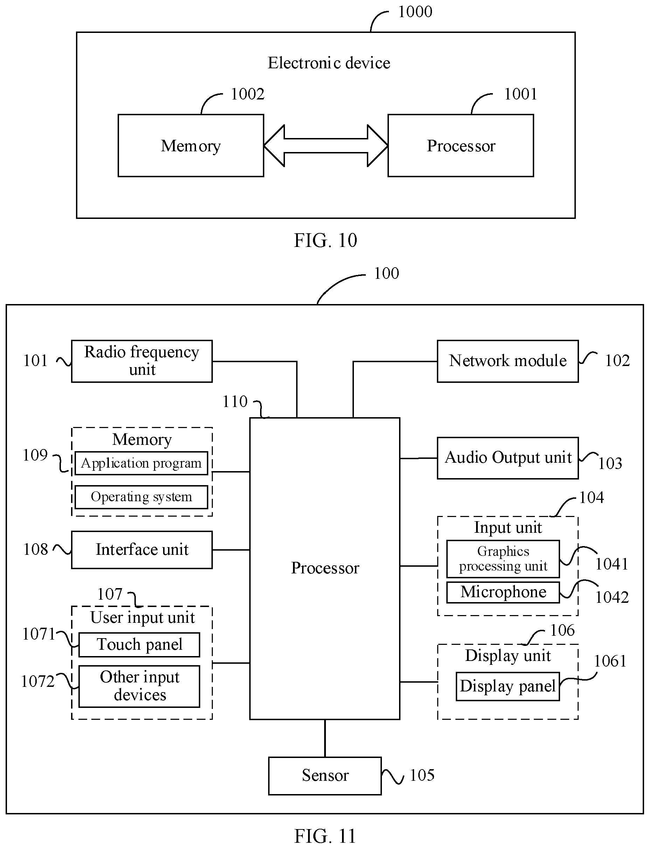

Optionally, as shown in FIG. 10, the embodiments of this application further provide an electronic device 1000, including a processor 1001, a memory 1002, and a program or instructions stored on the memory 1002 and executable on the processor 1001. The program or instructions, when executed by the processor 1001, implements/implement all the processes of the above display method embodiments and can achieve the same technical effects, details of which are omitted here for brevity.

It should be noted, the electronic device in the embodiments of this application includes the above mobile electronic device and the above non-mobile electronic device.

FIG. 11 is a schematic structural diagram of hardware of an electronic device for implementing the embodiments of this application.

The electronic device 100 includes, but is not limited to: a radio frequency unit 101, a network module 102, an audio output unit 103, an input unit 104, a sensor 105, a display unit 106, a user input unit 107, an interface unit 108, a memory 109, a processor 110, and other components.

Those skilled in the art can understand that the electronic device 100 further includes a power supply (such as a battery) for supplying power to the various components. The power supply may be logically connected to the processor 110 by using a power management system, thereby implementing functions such as charging, discharging, and power consumption management by using the power management system. The structure of the electronic device shown in FIG. 11 constitutes no limitation on the electronic device, and the electronic device may include more or fewer components than those shown in the figure, or some components may be combined, or a different component deployment may be used, details of which are omitted here.

The user input unit 107 is configured to receive a first input performed a user; the processor 110 is configured to control, in response to the first input received by the user input unit 107, an expandable screen to be folded; the display unit 106 is configured to display, in response to the first input received by the user input unit 107, a target object on an outer screen, wherein the target object includes at least one of the following items: a target application program window and a target application program identifier; the target application program window is an application program window of an application program, which meets a preset display condition, among at least one application program in a running state; and the target application program identifier is an application program identifier of an application program, which does not meet the preset display condition, among the at least one application program in the running state.

Optionally, in the embodiments of this application, the display unit 106 is specifically configured to: in a case that the target object includes a target application program window, and a first application program is associated with a preferred screen region of an inner screen, display a first application program window of the first application program on the outer screen, wherein the target object includes the first application program window; and
the display unit 106 is specifically configured to: in a case that the target object includes a target application program window, and a preset region of an application program window of a second application program is located in the preferred screen region of the inner screen, display a second application program window of the second application program on the outer screen, wherein the target object includes the second application program window.

Optionally, in the embodiments of this application, the expandable screen includes two flexible screens which are arranged in a manner of facing away from each other; the inner screen is a flexible screen, which is in an inwards folded state, of the two flexible screens; and the outer screen is a flexible screen, which is in an outwards folded state, of the two flexible screens.

Optionally, in the embodiments of this application, the at least one application program in the running state includes at least one of the following items: an application program that is running in a background and an application program that is running in a foreground and has an application program window displayed on an inner screen.

Optionally, in the embodiments of this application, the user input unit 107 is further configured to receive a second input performed by a user; the processor 110 is configured to determine, in response to the second input received by the user input unit 107, a screen region corresponding to the second input to be the preferred screen region.

Optionally, in the embodiments of this application, the target object includes a target application program identifier, and the target application program identifier includes at least one application program identifier; the user input unit 107 is further configured to receive a third input performed by a user on the target application program identifier in the at least one application program identifier; and
the display unit 106 is further configured to display, in response to the third input received by the user input unit 107, an application program window of an application program corresponding to the target application identifier on the outer screen.

Optionally, in the embodiments of this application, the user input unit 107 is further configured to receive a fourth input performed by a user; the processor 110 is further configured to control, in response to the fourth input received by the user input unit 107, the expandable screen to be unfolded;
the display unit 106 is further configured to: display, in a preferred screen region of an inner screen, an application program window that is associated with the preferred screen region, and display, in a non-preferred screen region of the inner screen, an application program window that is not associated with the preferred screen region.

Optionally, in the embodiments of this application, the preset display condition includes that an application program is associated with the preferred screen region of the inner screen.
the user input unit 107 is further configured to receive a fifth input performed by a user on a first application program icon of the first application program;
the display unit 106 is further configured to: display at least two screen region identifiers in response to the fifth input received by the user input unit 107, wherein each screen region identifier indicates one screen region; the at least two screen region identifiers include a first screen region identifier; a first screen region indicated by the first screen region identifier is the preferred screen region;
the user input unit 107 is further configured to receive a sixth input performed by a user on the first screen region identifier among the at least one screen region identifier;
the processor 110 is configured to establish an association relationship between the first screen region and the first application program in response to the sixth input received by the receiving module; and
the display unit 106 is further configured to display the first screen region identifier on the first application program icon in response to the first input received by the receiving module.

Optionally, in the embodiments of this application, the target object includes an application program window of the second application program; a preset region of the application program window of the second application program is located in a first screen region of the inner screen; and the first screen region is the preferred screen region. a second application program icon of the second application program includes a first screen region identifier; the first screen region identifier indicates the first screen region;
the user input unit 107 is further configured to receive a seventh input performed by a user on the application program window of the second application program;
the processor 110 is configured to move the application program window of the second application program to a second screen region in response to the seventh input received by the user input unit 107;
the processor 110 is further configured to update the first screen region identifier into a second screen region identifier in a case that the preset region of the application program window of the second application program is located at the second screen region;
the second screen region is a non-preferred screen region; and the second screen region identifier indicates the second screen region.

In the electronic device provided by the embodiments of this application, the electronic device receives a first input performed by a user, controls an expandable screen to be folded, and displays a target object on an outer screen. The target object includes at least one of the following items: a target application program window and a target application program identifier; the target application program window is an application program window of an application program, which meets a preset display condition, among at least one application program in a running state; and the target application program identifier is an application program identifier of an application program, which does not meet the preset display condition, among the at least one application program in the running state. By this method, the electronic device can display, on the first screen in a case that the user folds the expandable screen, an application program window of an application program that meets the preset display condition, and display, on the outer screen, an application program identifier of an application program that does not meet the preset display condition, so that the user can still continue to view a desired application program window on the outer screen in a case that the user folds the foldable screen and cannot continue to view the application program window on the foldable screen. In this way, the flexibility of application program window displaying can be effectively improved. When the foldable screen is in the folded state, it ensures that the user can normally use an application program window that is running on a background or is displayed on the foldable screen.

It should be understood that in the embodiments of this application, the input unit 104 may include a graphics processing unit (graphics processing unit, GPU) 1041 and a microphone 1042, and the GPU 1041 processes image data of static pictures or videos obtained by an image capturing apparatus (such as a camera) in a video capturing mode or an image capturing mode. The display unit 106 may include a display panel 1061, and the display panel 1061 may be configured by using a liquid crystal display, an organic light-emitting diode, or the like. The user input unit 107 includes a touch-control panel 1071 and another input device 1072. The touch-control panel 1071 is also referred to as a touch screen. The touch-control panel 1071 may include two parts: a touch detection apparatus and a touch controller. The another input device 1072 may include, but not limited to, a physical keyboard, a function key (such as a volume control key or a switch key), a track ball, a mouse, and a joystick, which is not described herein again. The memory 109 may be configured to store a software program and various data, including but not limited to application programs and operating systems. The processor 110 may integrate an application processor and a modem processor. The application processor mainly processes an operating system, a user interface, an application program, and the like, and the modem processor mainly processes wireless communications. It can be understood that the foregoing modem processor may either not be integrated into the processor 110.

The embodiments of this application further provide a readable storage medium. The readable storage medium stores a program or instructions. The program or instructions, when executed by a processor, implements/implement all the processes of the foregoing display method embodiments and can achieve the same technical effects, details of which are omitted here for brevity.

The processor is the processor in the electronic device in the above embodiment. The readable storage medium includes a computer-readable storage medium, for example, a computer read-only memory (Read-Only Memory, ROM), a random access memory (Random Access Memory, RAM), a magnetic disk, or an optical disk.

The embodiments of this application further provide a chip. The chip includes a processor and a communication interface. The communication interface is coupled to the processor. The processor is configured to run a program or instructions to implement all the processes of the foregoing display method embodiments and can achieve the same technical effects, details of which are omitted here for brevity.

It should be understood that the chip mentioned in the embodiments of this application can also be referred to as a system chip, a chip system, or a system-on-chip.

The embodiments of this application provide a computer program product. The program product is stored in a non-volatile storage medium; and the program product, when executed by at least one processor, implements all the processes of the foregoing display method embodiments and can achieve the same technical effects.

It should be noted, the terms "include", "comprise", or any other variations thereof here is intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and devices in the embodiments of this application is not limited to performing functions in the order shown or discussed, but may also include performing functions in a substantially simultaneous manner or in an opposite order according to the functions involved. For example, the methods described may be executed in a different order than that described, and various steps may also be added, omitted, or combined. In addition, features described with reference to some examples may also be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially, or the part contributing to the prior art, may be presented in the form of a software product. The computer software product is stored in a storage medium (for example, a ROM/RAM, a magnetic disk, or an optical disk) including several instructions to enable a terminal (which may be a mobile phone, a computer, a server, an air conditioner, a network device, or the like) to perform the methods described in all the embodiments of this application.

The embodiments of this application have been described above with reference to the accompanying drawings. This application is not limited to the specific implementations described above, and the specific implementations described above are merely exemplary and not limitative. Those of ordinary skill in the art may make various forms under the teaching of this application without departing from the spirit of this application and the protection scope of the claims, and these forms shall all fall within the protection of this application.

## Claims

1. A display method, applied to a display apparatus comprising an expandable screen, wherein the method comprises:
receiving a first input performed by a user; and
controlling, in response to the first input, the expandable screen to be folded, and displaying, in response to the first input, a target object on an outer screen, wherein the target object comprises at least one of the following items: a target application program window and a target application program identifier;
the target application program window is an application program window of an application program, which meets a preset display condition, among at least one application program in a running state; and the target application program identifier is an application program identifier of an application program, which does not meet the preset display condition, among the at least one application program in the running state.

2. The method according to claim 1, wherein the displaying a target object on an outer screen comprises:
in a case that the target object comprises a target application program window, and a first application program is associated with a preferred screen region of an inner screen, displaying a first application program window of the first application program on the outer screen, wherein the target object comprises the first application program window; and
in a case that the target object comprises a target application program window, and a preset region of an application program window of a second application program is located in the preferred screen region of the inner screen, displaying a second application program window of the second application program on the outer screen, wherein the target object comprises the second application program window.

3. The method according to claim 2, wherein the expandable screen comprises two flexible screens which are arranged in a manner of facing away from each other; the inner screen is a flexible screen, which is in an inwards folded state, of the two flexible screens; and the outer screen is a flexible screen, which is in an outwards folded state, of the two flexible screens.

4. The method according to claim 1, wherein the at least one application program in the running state comprises at least one of the following items: an application program that is running in a background and an application program that is running in a foreground and has an application program window displayed on an inner screen.

5. The method according to claim 2, wherein before the receiving a first input performed by a user, the method further comprises:
receiving a second input performed by a user; and
determining, in response to the second input, a screen region corresponding to the second input to be the preferred screen region.

6. The method according to claim 1, wherein the target object comprises the target application program identifier, and the target application program identifier comprises at least one application program identifier; and
after the controlling, in response to the first input, the expandable screen to be folded, and displaying, in response to the first input, a target object on an outer screen, the method further comprises:
receiving a third input performed by a user on a target application program identifier in the at least one application program identifier; and
displaying, in response to the third input, an application program window of an application program corresponding to the target application identifier on the outer screen.

7. The method according to claim 6, wherein after the displaying, in response to the third input, an application program window of an application program corresponding to the target application identifier on the outer screen, the method further comprises:
receiving a fourth performed by a user; and
controlling, in response to the fourth input, the expandable screen to be unfolded, displaying, in a preferred screen region of an inner screen, an application program window that is associated with the preferred screen region, and displaying, in a non-preferred screen region of the inner screen, an application program window that is not associated with the preferred screen region.

8. The method according to claim 2, wherein the preset display condition comprises that an application program is associated with the preferred screen region of the inner screen; and the method further comprises:
receiving a fifth input performed by a user on a first application program icon of the first application program;
displaying at least two screen region identifiers in response to the fifth input, wherein each screen region identifier indicates one screen region; the at least two screen region identifiers comprise a first screen region identifier; and a first screen region indicated by the first screen region identifier is the preferred screen region;
receiving a sixth input performed by a user on the first screen region identifier among the at least one screen region identifier; and
establishing an association relationship between the first screen region and the first application program in response to the sixth input, and displaying the first screen region identifier on the first application program icon.

9. The method according to claim 2, wherein the target object comprises an application program window of the second application program; a preset region of the application program window of the second application program is located in a first screen region of the inner screen; the first screen region is the preferred screen region; a second application program icon of the second application program comprises a first screen region identifier; the first screen region identifier indicates the first screen region; and
the method further comprises:
receiving a seventh input performed by a user on the application program window of the second application program;
moving the application program window of the second application program to a second screen region in response to the seventh input; and
updating the first screen region identifier into a second screen region identifier in a case that the preset region of the application program window of the second application program is located at the second screen region; wherein
the second screen region is a non-preferred screen region; and the second screen region identifier indicates the second screen region.

10. A display apparatus, wherein the apparatus comprises: a receiving module, a control module, and a display module, wherein:
the receiving module is configured to receive a first input performed by a user;
the control module is configured to control, in response to the first input received by the receiving module, an expandable screen to be folded;
the display module is configured to display, in response to the first input received by the receiving module, a target object on an outer screen, wherein the target object comprises at least one of the following items: a target application program window and a target application program identifier;
the target application program window is an application program window of an application program, which meets a preset display condition, among at least one application program in a running state; and the target application program identifier is an application program identifier of an application program, which does not meet the preset display condition, among the at least one application program in the running state.

11. The apparatus according to claim 10, wherein
the display module is specifically configured to: in a case that the target object comprises a target application program window, and a first application program is associated with a preferred screen region of an inner screen, display a first application program window of the first application program on the outer screen, wherein the target object comprises the first application program window; and
the display module is specifically configured to: in a case that the target object comprises a target application program window, and a preset region of an application program window of a second application program is located in the preferred screen region of the inner screen, display a second application program window of the second application program on the outer screen, wherein the target object comprises the second application program window.

12. The apparatus according to claim 11, wherein the expandable screen comprises two flexible screens which are arranged in a manner of facing away from each other; the inner screen is a flexible screen, which is in an inwards folded state, of the two flexible screens; and the outer screen is a flexible screen, which is in an outwards folded state, of the two flexible screens.

13. The apparatus according to claim 10, wherein the at least one application program in the running state comprises at least one of the following items: an application program that is running in a background and an application program that is running in a foreground and has an application program window displayed on an inner screen.

14. The apparatus according to claim 11, wherein the apparatus further comprises: a determining module;
the receiving module is further configured to receive a second input performed by a user; and
the determining module is configured to determine, in response to the second input received by the receiving module, a screen region corresponding to the second input to be the preferred screen region.

15. The apparatus according to claim 10, wherein the target object comprises the target application program identifier, and the target application program comprises at least one application program identifier; and
the receiving module is further configured to receive a third input performed by a user on a target application program identifier in the at least one application program identifier; and
the display module is further configured to display, in response to the third input received by the receiving module, an application program window of an application program corresponding to the target application identifier on the outer screen.

16. The apparatus according to claim 15, wherein
the receiving module is further configured to receive a fourth input performed by a user; and
the control module is further configured to control, in response to the fourth input received by the receiving module, the expandable screen to be unfolded; and
the display module is further configured to: display, in a preferred screen region of an inner screen, an application program window that is associated with the preferred screen region, and display, in a non-preferred screen region of the inner screen, an application program window that is not associated with the preferred screen region.

17. The apparatus according to claim 11, wherein the preset display condition comprises that an application program is associated with the preferred screen region of the inner screen; and
the receiving module is further configured to receive a fifth input performed by a user on a first application program icon of the first application program;
the display module is further configured to: display at least two screen region identifiers in response to the fifth input received by the receiving module, wherein each screen region identifier indicates one screen region; the at least two screen region identifiers comprise a first screen region identifier; and a first screen region indicated by the first screen region identifier is the preferred screen region;
the receiving module is further configured to receive a sixth input performed by a user on the first screen region identifier among the at least one screen region identifier;
the apparatus further comprises: an execution module;
the execution module is configured to establish an association relationship between the first screen region and the first application program in response to the sixth input received by the receiving module; and
the display module is further configured to display the first screen region identifier on the first application program icon in response to the first input received by the receiving module.

18. The apparatus according to claim 11, wherein the target object comprises an application program window of the second application program; a preset region of the application program window of the second application program is located in a first screen region of the inner screen; the first screen region is the preferred screen region; a second application program icon of the second application program comprises a first screen region identifier; the first screen region identifier indicates the first screen region; and
the receiving module is further configured to receive a seventh input performed by a user on the application program window of the second application program;
the apparatus further comprises: an execution module;
the execution module is configured to move the application program window of the second application program to a second screen region in response to the seventh input received by the receiving module;
the execution module is further configured to update the first screen region identifier into a second screen region identifier in a case that the preset region of the application program window of the second application program is located at the second screen region; wherein
the second screen region is a non-preferred screen region; and the second screen region identifier indicates the second screen region.

19. An electronic device, comprising a processor, a memory, and a program or instructions stored in the memory and executable on the processor, wherein the program or instructions, when executed by the processor, implement steps of the display method according to any one of claims 1 to 9.

20. A readable storage medium, wherein the readable storage medium stores a program or instructions, wherein the program or instructions, when executed by a processor, implement the steps of the display method according to any one of claims 1 to 9.
